# EUROPEAN PATENT APPLICATION

(11) **EP 4 814 051 A1**
(43) Date of publication of application: **30.09.2026**
(21) Application number: 24894448.0
(22) Date of filing: 01.11.2024
(51) Int. Cl.: C08L 23/08

(54) **HIGH-DENSITY POLYETHYLENE RESIN COMPOSITION FOR BIAXIALLY ORIENTED FILM**

(30) Priority: 21.11.2023 KR 20230162633
(71) Applicant: Lotte Chemical Corporation, Seoul 05551 (KR)
(72) Inventor: KIM, Yong Bin, Daejeon 34110 (KR); CHO, Jin Ju, Daejeon 34110 (KR); OH, Sun Hyung, Daejeon 34110 (KR); CHOI, Byung Doo, Daejeon 34110 (KR)
(74) Representative: Germain Maureau
(86) International application number: PCT/KR2024/017049
(87) International publication number: WO 2025/110554

(57) **Abstract**

Disclosed is a polyethylene resin composition for a biaxially oriented film, which is moldable with a biaxial stretching machine and exhibits excellent stretching properties. The present invention provides a polyethylene resin composition for a biaxially oriented film, including (A) 60 to 95 wt% of a copolymer of ethylene and olefin having 4 to 10 carbon atoms, the copolymer having a density of 0.950 to 0.970 g/cm³, and (B) 5 to 40 wt% of a copolymer of ethylene and olefin having 4 to 10 carbon atoms, the copolymer having a density of 0.870 to 0.920 g/cm³, wherein the resin composition has a melt index (190°C, 2.16-kg load) of 0.5 to 3 g/10 min and a density of 0.925 to 0.955 g/cm³.

## Description

### TECHNICAL FIELD

The present invention relates to a polyethylene resin composition, and more particularly, to a high-density polyethylene resin composition for a biaxially oriented film.

This application claims the benefit of Korean Patent Application No. 10-2023-0162633, filed on November 21, 2023, in the Korean Intellectual Property Office, the disclosure of which is incorporated herein in its entirety by reference.

### BACKGROUND ART

Environmental issues arising from the use of plastics are certainly not new and are regarded as matters that need to be addressed with continuous attention. In particular, since the COVID-19 pandemic, environmental issues, which have become more prominent due to the indiscriminate use of packaging containers, have raised awareness not only among companies but also among general consumers. In this regard, with the emergence of new environmental issues, including marine plastic issues, the plastics manufacturing industry is reacting sensitively to the related market environment. Container packaging materials, which are used in large quantities, are no exception, and beyond simply doing production, response to environmental issues such as plastic waste and greenhouse gas reduction is being required. Responding to these demands, plastic manufacturing companies recognize the necessity of developing materials capable of reducing the environmental burden, and global efforts are intensifying to develop uni-material products based on recycling and bio-plastics contributing to carbon dioxide (CO₂) reduction.

The 3R Initiative is a representative global response measure to plastic environmental issues. The 3Rs stand for Reduce (reduction in usage), Replace (use of alternative materials), and Recycle/Reuse (recycling and reuse), and regarding uni-materials within the Recycle/Reuse, BOPE (bi-oriented polyethylene) may respond to plastic environmental issues. BOPE is biaxially stretched in an MD (machine direction) and a TD (transverse direction), and thus exhibits superior transparency compared to general PE films, and the film exhibits excellent mechanical strength and impact resistance through orientation. Furthermore, since the biaxial stretching reduces thickness, BOPE provides the benefit of reducing the usage of plastic products. Meanwhile, in biaxially oriented films, replacing layers typically used as BOPA (biaxially oriented polyamide) or BOPET (biaxially oriented polyethylene terephthalate) with BOPE (biaxially oriented polyethylene) to implement uni-materials may align with such development trends, but cases demonstrating satisfactory stretching properties as polyethylene that is moldable with a biaxial stretching machine and usable as a first-grade paper (printing surface) for easy recycling have not yet been presented.

Korean Patent Registration No. 0746253 discloses a polyethylene-based stretched film capable of uniform stretching and exhibiting Elmendorf tear strength. However, it is difficult to obtain satisfactory stretching properties when performing biaxial stretching with the actual composition presented.

### DISCLOSURE OF THE INVENTION

### TECHNICAL PROBLEM

An aspect of the present invention provides a polyethylene resin composition for a biaxially oriented film, which is moldable with a biaxial stretching machine and exhibits excellent stretching properties.

### TECHNICAL SOLUTION

To address the tasks described above, according to an aspect of the present invention, there is provided a polyethylene resin composition for a biaxially oriented film, including: (A) 60 to 95 wt% of a copolymer of ethylene and olefin having 4 to 10 carbon atoms, the copolymer having a density of 0.950 to 0.970 g/cm³; and (B) 5 to 40 wt% of a copolymer of ethylene and olefin having 4 to 10 carbon atoms, the copolymer having a density of 0.870 to 0.920 g/cm³, wherein the resin composition has a melt index (190°C, 2.16-kg load) of 0.5 to 3 g/10 min and a density of 0.925 to 0.955 g/cm³.

Furthermore, in a machine direction and a transverse direction, as measured by a method below, the resin composition has a tensile strength of 700 kgf/cm² or more and 1,500 kgf/cm² or more, respectively, a thermal shrinkage rate of 5% or less in each direction, and a modulus of elasticity of 300 MPa or more and 600 MPa or more, respectively.

### [Measurement method]

A biaxially stretched film having a thickness of 30 µm is prepared from a sheet molded with the resin composition under the following conditions: a machine direction stretching ratio of 5 to 6.5 times (preheating temperature: 114 to 118°C, stretching temperature: 105 to 116°C, and annealing temperature: 110°C) and a transverse direction stretching ratio of 9 times (preheating temperature: 134 to 156°C, stretching temperature: 116 to 130°C, and annealing temperature: 120 to 125°C), and a biaxially stretched film specimen (10 x 10 cm) is heat-treated in a convection oven at 100°C for 1 minute to measure shrinkage rate by determining a reduced length in the machine direction and the transverse direction, the specimen is measured for tensile strength according to ASTM D882 using a tensile tester (model: Instron4466) under conditions of a load cell of 100 N and a test speed of 500 mm/min, and a value corresponding to a tangent slope within an initial linear region of a stress-strain curve obtained through the measurement method is extracted and then quantified as modulus of elasticity.

### ADVANTAGEOUS EFFECTS

According to the present invention, a polyethylene resin composition for a biaxially oriented film, which is moldable with a biaxial stretching machine and exhibits excellent stretching properties, as a polyethylene resin composition having a specific level of melt index and density, where a copolymer of ethylene and olefin having 4 to 10 carbon atoms with different densities within a certain range is mixed.

### MODE FOR CARRYING OUT THE INVENTION

Hereinafter, the present invention will be described in detail through preferred embodiments. Before getting to the point, it will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention. Thus, configurations of embodiments described herein are simply the most preferable embodiments of the present invention and are not representative of all the technical spirits of the invention, and thus it should be understood that there may exist various equivalents and modified examples as substitutes at the time when the present invention is filed.

In a condition where a composition exhibiting excellent stretching properties has not yet been presented for replacing layers typically used as BOPA or BOPET with BOPE to implement uni-materials, the present inventors found that a polyethylene resin composition having a specific level of melt index and density, where a copolymer of ethylene and olefin having 4 to 10 carbon atoms with different densities within a certain range is mixed is moldable with a biaxial stretching machine and exhibits excellent stretching properties, thereby leading to the present invention.

Accordingly, the present invention discloses a polyethylene resin composition for a biaxially oriented film, including: (A) 60 to 95 wt% of a copolymer of ethylene and olefin having 4 to 10 carbon atoms, the copolymer having a density of 0.950 to 0.970 g/cm³; and (B) 5 to 40 wt% of a copolymer of ethylene and olefin having 4 to 10 carbon atoms, the copolymer having a density of 0.870 to 0.920 g/cm³, where the resin composition has a melt index (190°C, 2.16-kg load) of 0.5 to 3 g/10 min and a density of 0.925 to 0.955 g/cm³.

In the present invention, the copolymer (A) is a high-density polyethylene, and may have a density of 0.950 to 0.970 g/cm³, and preferably 0.955 to 0.960 g/cm³. When the density is out of the range, biaxial stretching molding is not achievable.

Furthermore, as the copolymer (A), a copolymer of ethylene and α-olefin such as propylene, 1-butene, 1-hexene, or 1-octene may be used, and preferably, a copolymer of ethylene and 1-butene may be used, and the copolymer may have a melt index (190°C, 2.16-kg load) of 0.5 to 3 g/10 min, and preferably 0.6 to 1.5 g/10 min. When a copolymer prepared using an α-olefin other than 1-butene as a comonomer copolymerized with ethylene is applied, or when the melt index is out of the range, there may be limitations in improving low shrinkage properties, or biaxial stretching molding may not be achievable. The polymerization method of the copolymer (A) is not particularly limited, and the copolymer (A) may be prepared through any method such as a gas phase method, a solution method, or a slurry method.

The copolymer (A) may be included in an amount of 60 to 95 wt% with respect to a total resin composition, and preferably may be included in an amount of 70 to 90 wt%. When the amount of the copolymer (A) is out of the range, stretching properties may not be improved.

In the present invention, the copolymer (B) is a low-density polyethylene, and may have a density of 0.870 to 0.920 g/cm³, and preferably 0.880 to 0.910 g/cm³. When the density is out of the range, biaxial stretching molding is not achievable.

As the copolymer (B), a copolymer of ethylene and α-olefin such as propylene, 1-butene, 1-hexene, or 1-octene may be used, and preferably, a copolymer of ethylene and 1-butene or 1-octene may be used, and the copolymer may have a melt index (190°C, 2.16-kg load) of 3 to 30 g/10 min, and preferably 4 to 20 g/10 min. When a copolymer prepared using an α-olefin other than 1-butene and 1-octene as a comonomer copolymerized with ethylene is applied, or when the melt index is out of the range, there may be limitations in improving stretching properties, or biaxial stretching molding may not be achievable. The polymerization method of the copolymer (B) is not particularly limited, and the copolymer (B) may be prepared through any method such as a gas phase method, a solution method, or a slurry method.

The copolymer (B) may be included in an amount of 5 to 40 wt% with respect to a total resin composition, and preferably may be included in an amount of 10 to 30 wt%. When the amount of the copolymer (B) is out of the range, transparency and low shrinkage properties may not be improved, or surface properties may be reduced during sheet molding.

According to the mixing of the copolymer (A) and the copolymer (B) as described above, a final resin composition may have a melt index (190°C, 2.16-kg load) of 0.5 to 3 g/10 min, and preferably 1 to 1.3 g/10 min, and may have a density of 0.925 to 0.955 g/cm³, and preferably 0.950 to 0.955 g/cm³.

In the present invention, it was confirmed that stretching properties may be improved by mixing a copolymer of ethylene and olefin having 4 to 10 carbon atoms with different densities within a certain range and by adjusting the melt index and the density of a final resin composition. Specifically, in a machine direction and a transverse direction measured by the following methods, a polyethylene resin composition for a biaxially oriented film, having a tensile strength of 700 kgf/cm² or more and 1,500 kgf/cm² or more, respectively, and preferably 1,000 kgf/cm²or more and 2,000 kgf/cm²or more, a thermal shrinkage rate of 5% or less in each direction, and preferably 3% or less, and a modulus of elasticity of 300 MPa or more and 600 MPa or more, respectively, and preferably 800 MPa or more and 1,000 MPa or more is provided.

### [Measurement method]

A biaxially stretched film having a thickness of 30 µm is prepared from a sheet molded with the resin composition under the following conditions: a machine direction stretching ratio of 5 to 6.5 times (preheating temperature: 114 to 118°C, stretching temperature: 105 to 116°C, and annealing temperature: 110°C) and a transverse direction stretching ratio of 9 times (preheating temperature: 134 to 156°C, stretching temperature: 116 to 130°C, and annealing temperature: 120 to 125°C), and a biaxially stretched film specimen (10 x 10 cm) is heat-treated in a convection oven at 100°C for 1 minute to measure shrinkage rate by determining a reduced length in the machine direction and the transverse direction, the specimen is measured for tensile strength according to ASTM D882 using a tensile tester (model: Instron4466) under conditions of a load cell of 100 N and a test speed of 500 mm/min, and a value corresponding to a tangent slope within an initial linear region of a stress-strain curve obtained through the measurement method is extracted and then quantified as modulus of elasticity.

In the polyethylene resin composition for a biaxially oriented film according to the present invention, general polyethylene additives may be added for application in various uses. For example, antioxidants, heat and light stabilizers, antistatic agents, lubricants, anti-blocking agents, preservatives, processing aids, slip agents, anti-adhesive agents, pigments, flame retardants, foaming agents, and the like may be added in an appropriate amount and used.

The polyethylene resin composition for a biaxially oriented film according to the present invention may be prepared by mixing and extruding the components according to typical methods known in the art. For example, the components may be fed into a twin-screw extruder and melt-kneaded to prepare a polyethylene resin composition for a biaxially oriented film.

Hereinafter, the present invention will be described in more detail through specific Examples and Comparative Examples. In Examples and Comparative Examples, density and melt index were measured according to the following methods.

### [Measurement methods]

### (1) Density

Density was measured in accordance with ASTM D1505.

### (2) Melt Index (MI)

In according with ASTM D1238, melt index was measured under a load of 2.16 kg at 190°C.

### Examples and Comparative Examples

The copolymers shown in Table 1 were mixed and fed into a twin-screw extruder, and melt-kneaded under conditions of 180 to 220°C to prepare a pellet-type polyethylene resin composition having the physical properties shown in Table 1. As for Comparative Example, a commercial product was prepared.

### Test Example

For the manufactured or prepared polyethylene resin compositions, stretched films were prepared and physical properties were measured according to the following methods, and the results are shown in Table 1 below.

### [Film Physical Properties]

A sheet was molded using the resin composition through an extruder set to a maximum of 260°C, and then a biaxially stretched film having a thickness of 30 µm was prepared from a sheet molded with the resin composition under the following conditions: a machine direction stretching ratio of 5 to 6.5 times (preheating temperature: 114 to 118°C, stretching temperature: 105 to 116°C, and annealing temperature: 110°C) and a transverse direction stretching ratio of 9 times (preheating temperature: 134 to 156°C, stretching temperature: 116 to 130°C, and annealing temperature: 120 to 125°C) to determine a maximum stretching ratio of the film through the adjustment of a stretching ratio within a biaxial stretching machine, and a biaxially stretched film specimen (10 x 10 cm) was heat-treated in a convection oven at 100°C for 1 minute to measure shrinkage rate by determining a reduced length in the machine direction and the transverse direction, the specimen was measured for tensile strength according to ASTM D882 using a tensile tester (model: Instron4466) under conditions of a load cell of 100 N and a test speed of 500 mm/min, and a value corresponding to a tangent slope within an initial linear region of a stress-strain curve obtained through the measurement method was extracted and then quantified as modulus of elasticity.

**[Table 1]**

| Item | Element (Parts by weight) | | | | Dens ity (g/ cm³) | MI (g/1 0 min) | Thic knes s (µm) | Maximum Stretching Ratio (%) | | Tensile Strength (kgf/cm²) | | Modulus of Elasticity (MPa) | | Thermal Shrinkage (%) | |
|---|---|---|---|---|---|---|---|---|---|---|---|---|---|---|---|
| | a | b | c | d | | | | MD | TD | MD | TD | MD | TD | MD | TD |
| Comp arat ive Exam ple | - | | | | 0.92 6 | 1.7 | | 500 | | 1,20 0 | 2,00 0 | 350 | 510 | 5 | 5 |
| Exam ple 1 | - | 7 0 | - | 3 0 | 0.93 6 | 0.8 | | 500 | | 890 | 1,70 0 | 380 | 620 | 4 | 5 |
| Exam ple 2 | 8 0 | - | - | 2 0 | 0.94 5 | 1.8 | 30 | 500 | 900 | 870 | 2,40 0 | 820 | 1,300 | 3 | 3 |
| Exam ple 3 | 7 0 | - | - | 3 0 | 0.93 9 | 2.7 | | 500 | | 720 | 2,00 0 | 520 | 900 | 3 | 5 |
| Exam ple 4 | 7 0 | - | 3 0 | | 0.94 2 | 1.5 | | 500 | | 820 | 2,90 0 | 820 | 1,600 | 2 | 5 |
| Exam ple 5 | 9 0 | - | - | 1 0 | 0.95 2 | 1.3 | | 650 | | 1,80 0 | 2,10 0 | 1,000 | 1,400 | 1 | 3 |
| Exam ple 6 | 9 0 | - | 1 0 | | 0.95 3 | 1 | | 650 | | 1,50 0 | 2,00 0 | 1,100 | 1,500 | 1 | 3 |
| * Note | | | | | | | | | | | | | | | |
| - a : MI 0.8 g/10 min, Density 0.956 g/cm³, Comonomer 1-butene | | | | | | | | | | | | | | | |
| - b : MI 0.3 g/10 min, Density 0.945 g/cm³, Comonomer 1-butene | | | | | | | | | | | | | | | |
| - c : MI 4 g/10 min, Density 0.904 g/cm³, Comonomer 1-octene | | | | | | | | | | | | | | | |
| - d : MI 18 g/10 min, Density 0.893 g/cm³, Comonomer 1-butene | | | | | | | | | | | | | | | |
| - Comparative Example: Commercial product (Dow Chemical, INNATE TF80) | | | | | | | | | | | | | | | |

Referring to Table 1, it is confirmed that biaxially stretched films (Examples 1 to 6) prepared from a polyethylene resin composition having a specific level of melt index and density, where a copolymer of ethylene and olefin having 4 to 10 carbon atoms with different densities within a certain range is mixed according to the present invention exhibit excellent stretching properties with a maximum stretching ratio of 5 to 6.5 times in the MD and 9 times in the TD along with excellent mechanical properties and thermal shrinkage resistance, and particularly, under ideal conditions where the density is within a range of 0.950 to 0.955 g/cm³ and the melt index is within a range of 1 to 1.3 (Examples 5 and 6), the physical property balance between mechanical properties and thermal shrinkage resistance is dramatically improved.

Regarding this, the specific composition of the commercial product according to Comparative Example is unknown, but the density is slightly low and the melt index is slightly high, and although the tensile strength is excellent, the modulus of elasticity is low and the thermal shrinkage rate is high, thus indicating that the commercial product has inferior properties in the printing process.

The preferred embodiments of the present invention have been described. The description of the present invention has been presented for purposes of illustration, and it will be understood by those skilled in the art that other specific modifications may be easily made without changing the technical idea or essential features thereof.

Therefore, the scope of the present invention is represented by the following claims rather than the above detailed description, and all changes and changed forms derived from the meaning, scope, and equivalent concepts of the claims should be construed as being included in the scope of the present invention.

## Claims

1. A polyethylene resin composition for a biaxially oriented film, comprising:
(A) 60 to 95 wt% of a copolymer of ethylene and olefin having 4 to 10 carbon atoms, the copolymer having a density of 0.950 to 0.970 g/cm³; and
(B) 5 to 40 wt% of a copolymer of ethylene and olefin having 4 to 10 carbon atoms, the copolymer having a density of 0.870 to 0.920 g/cm³,
wherein the resin composition has a melt index (190°C, 2.16-kg load) of 0.5 to 3 g/10 min and a density of 0.925 to 0.955 g/cm³.

2. The polyethylene resin composition for a biaxially oriented film of claim 1, wherein in a machine direction and a transverse direction, as measured by a method below, the resin composition has a tensile strength of 700 kgf/cm² or more and 1,500 kgf/cm²or more, respectively, a thermal shrinkage rate of 5% or less in each direction, and a modulus of elasticity of 300 MPa or more and 600 MPa or more, respectively,
[measurement method]
a biaxially stretched film having a thickness of 30 µm is prepared from a sheet molded with the resin composition under the following conditions: a machine direction stretching ratio of 5 to 6.5 times (preheating temperature: 114 to 118°C, stretching temperature: 105 to 116°C, and annealing temperature: 110°C) and a transverse direction stretching ratio of 9 times (preheating temperature: 134 to 156°C, stretching temperature: 116 to 130°C, and annealing temperature: 120 to 125°C), and a biaxially stretched film specimen (10 x 10 cm) is heat-treated in a convection oven at 100°C for 1 minute to measure shrinkage rate by determining a reduced length in the machine direction and the transverse direction, the specimen is measured for tensile strength according to ASTM D882 using a tensile tester (model: Instron4466) under conditions of a load cell of 100 N and a test speed of 500 mm/min, and a value corresponding to a tangent slope within an initial linear region of a stress-strain curve obtained through the measurement method is extracted and then quantified as modulus of elasticity.
